# FASCICULE DE BREVET EUROPEEN

(11) **EP 3 732 673 B1**
(45) Date de publication et mention de la délivrance du brevet: **09.10.2024**
(21) Numéro de dépôt: 18833071.6
(22) Date de dépôt: 28.12.2018
(51) Int. Cl.: G10K 11/00, G01V 1/38, B63B 22/00

(54) **DISPOSITIF DE MESURE DESTINE A ETRE IMMERGE**
MESSGERÄT ZUM EINTAUCHEN
MEASURING DEVICE INTENDED TO BE IMMERSED

(30) Priorité: 28.12.2017 FR 1701399
(43) Date de publication de la demande: 04.11.2020
(73) Titulaire: THALES, 92190 Meudon (FR)
(72) Inventeur: PREVEL, Florian, 29200 Brest (FR); GALET, Alain, 29200 Brest (FR)
(74) Mandataire: Atout PI Laplace
(86) Numéro de dépôt international: PCT/EP2018/097068
(87) Numéro de publication internationale: WO 2019/129839

(56) Documents cités:
- WO-A1-2010/025494
- WO-A2-2011/014071
- GB-A- 2 266 148
- GB-A- 2 414 800
- US-A- 3 141 148

## Description

Le domaine de l'invention est celui des dispositifs de mesure destinés à être immergés. Le dispositif de mesure comprend un axe de référence et est apte, lorsqu'il est immergé, à être dans une configuration déployée dans laquelle des bras sont répartis autour de l'axe de référence et portent un ensemble de blocs de mesure comprenant chacun au moins un capteur acoustique, et dans laquelle l'axe de référence s'étend sensiblement verticalement. Les blocs de mesure génèrent un couple de rotation du dispositif de mesure autour de l'axe de référence lors d'une translation verticale du dispositif de mesure en configuration déployée.

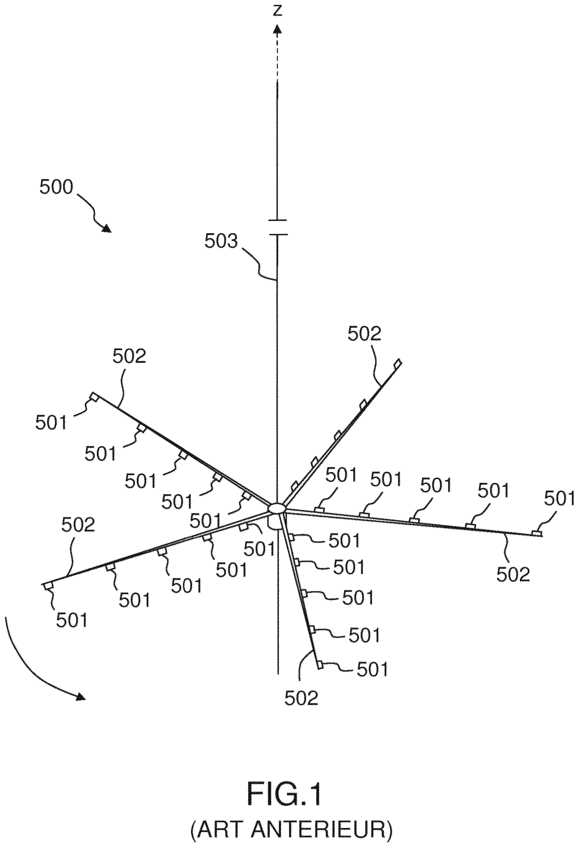

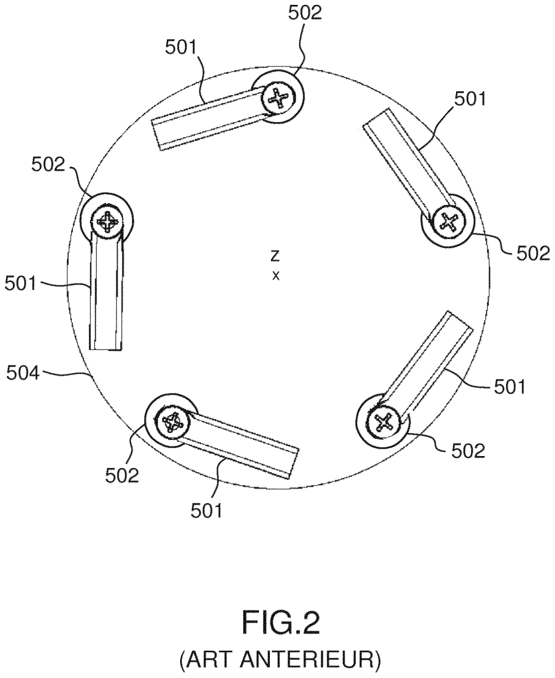

L'invention se rapporte notamment aux bouées acoustiques (« sonobuoy » en terminologie anglo-saxonne) aérolargables du type décrit dans la demande de brevet WO2010025494. Le dispositif de mesure des bouées aérolargables est une antenne de réception de signaux acoustiques comprenant un réseau de capteurs acoustiques. Le dispositif de mesure est apte à être dans une configuration rangée dans laquelle il est logé dans un boîtier tubulaire jusqu'à immersion de la bouée. Les bras s'étendent alors parallèlement à l'axe r. Les bras sont libérés et déployés lorsque la bouée est immergée. Une vue en perspective d'un exemple de dispositif de mesure 500 d'une bouée acoustique du type comprenant des bras 502 portant des capteurs 501 acoustiques et un axe r de référence s'étendant sensiblement verticalement selon l'axe longitudinal d'une ligne de plongée 503 est représenté sur la figure 1. Les capteurs 501 présentent chacun une forme de plaque inclinée par rapport à l'axe r du fait de la nécessité de loger les bras 502 et les capteurs 501 dans un boîtier tubulaire cylindrique 504 d'axe r avant immersion comme cela est représenté sur la figure 2. Les bras 502 sont inscrits dans le cylindre intérieur délimité par le boîtier 504 et dans une couronne centrée sur l'axe r et occupée par les bras 502.

Or, du fait de leur inclinaison, les capteurs acoustiques génèrent un couple de rotation du dispositif de mesure 500, autour de l'axe r de la ligne de plongée, sensiblement vertical, lors d'une translation du dispositif de mesure 500 selon un axe vertical. Le sens de la rotation provoquée par une translation verticale du dispositif de mesure 500 vers le haut est représenté par une flèche sur la figure 1.

Cette rotation du dispositif de mesure a pour effet de dégrader ses performances. D'une part, l'écoulement de l'eau sur les capteurs acoustiques perturbe leurs performances hydroacoustiques. D'autre part, le mouvement de rotation des capteurs acoustiques rend difficile la connaissance précise de leurs positions autour de l'axe de la ligne de plongée ce qui a un impact défavorable sur la précision des mesures de l'antenne de réception, notamment sur la précision de la position de cibles détectées dans un référentiel terrestre.

Une solution pour améliorer la précision de positionnement consiste à équiper la bouée d'un compas capable d'assurer un positionnement suffisamment précis même en présence de la rotation engendrée par l'agencement des capteurs. Toutefois, cela multiplie au moins par dix le coût du compas. Par ailleurs, cette solution n'améliore pas les performances hydroacoustiques des hydrophones qui restent soumis à l'écoulement de l'eau ce qui limite les performances de la bouée.

Une solution alternative consiste à équiper la bouée d'une bâche se déployant entre les capteurs lors du déploiement des bras. Cette bâche, qui augmente la traînée verticale du dispositif de mesure, a pour fonction de limiter les déplacements verticaux des capteurs. La traînée de la bâche limite fortement les mouvements verticaux. Toutefois, un changement de profondeur des hydrophones à une vitesse suffisante peut être souhaitable notamment pour réaliser des mesures à différentes profondeurs. Par ailleurs, cette solution n'est vraiment efficace qu'avec des antennes légères et elle est volumineuse et coûteuse.

Les mouvements verticaux non maîtrisés du dispositif de mesure sont principalement dus à la houle, c'est-à-dire à un mouvement vertical d'un corps à flottabilité positive (appelé corps flottant dans la suite) disposé au dessus du dispositif de mesure et relié à ce dispositif par la ligne de plongée. Les mouvements du corps flottant dus à la houle sont transmis au dispositif de mesure via la ligne de plongée. Une solution consiste à limiter les mouvements verticaux du dispositif de mesure en réalisant une partie de la ligne de plongée entre le corps flottant et le dispositif de mesure sous forme d'un ressort amortisseur assurant un découplage entre les mouvements verticaux du corps flottant et du dispositif de mesure. Les mouvements dus à la houle présentent une amplitude de l'ordre 5 mètres de part et d'autre d'une position d'équilibre. Or, lorsque le poids de la partie immergée de la bouée est important, il peut s'avérer complexe, voire impossible, de trouver un ressort capable de présenter des variations d'élongation de 5 m de part et d'autre d'une position d'équilibre pour assurer le découplage, tout en présentant une traînée supérieure au poids de la partie immergée de la bouée. Autrement dit, pour que cette solution soit efficace, les efforts liés au mouvement de la houle doivent être plus importants que les efforts présents dans le ressort amortisseur en statique. En conséquence, pour que cette solution fonctionne, la bouée doit être légère et présenter une traînée importante. Par ailleurs, le choix de cette solution conduit à remplacer une grande longueur de câble de la ligne de plongée par un ressort amortisseur ce qui est coûteux et volumineux.

Par ailleurs, on connaît également les documents US 3 141 148 et GB 2 414 800 divulguant respectivement une bouée et un sonar déployables comprenant chacun des bras, chaque bras étant muni d'hydrophones.

Un but de la présente invention est de limiter au moins un des inconvénients précités.

A cet effet, l'invention se rapporte à un dispositif de mesure destiné à être immergé dans l'eau comprenant un ensemble de bras et un axe de référence, le dispositif de mesure étant apte à être dans une configuration déployée, le dispositif de mesure comprenant un ensemble de blocs de mesure portés par des bras de l'ensemble de bras et comprenant chacun un capteur d'ondes acoustiques, l'ensemble de blocs de mesure étant configuré et agencé de sorte à générer un couple de rotation du dispositif de mesure autour de l'axe de référence s'étendant verticalement lors d'une translation verticale du dispositif de mesure dans la configuration déployée, le dispositif de mesure comprenant des moyens de compensation configurés et agencés de sorte à générer un autre couple de rotation du dispositif de mesure autour de l'axe de référence lors de la translation verticale, l'autre couple de rotation étant dirigé en sens inverse du couple de rotation et présentant une intensité inférieure au double de celle du couple de rotation.

Les bras s'étendent radialement autour de l'axe de référence.

Chaque bloc de mesure de l'ensemble de mesure comprend une première surface de contact avec l'eau destinée à être en contact physique direct avec l'eau et orientée, dans la configuration déployée, de sorte qu'elle subisse, sous l'effet de l'écoulement de l'eau sur la première surface de contact avec l'eau lors de la translation verticale, une première force comprenant une composante verticale et une composante horizontale comprenant une composante tangentielle la direction tangentielle étant définie par rapport à l'axe de référence, la composante tangentielle générant un couple de rotation individuel du dispositif de mesure autour de l'axe de référence, les couples de rotations individuels générés par les blocs de mesure de l'ensemble de mesure étant orientés dans le sens du couple de rotation,

Les moyens de compensation comprennent un ensemble d'au moins un bloc de compensation comprenant une deuxième surface de contact avec l'eau destinée à être en contact physique direct avec l'eau et orientée, dans la configuration déployée, de sorte qu'elle subisse, sous l'effet de l'écoulement de l'eau sur la deuxième surface de contact avec l'eau lors de la translation verticale, une deuxième force comprenant une composante verticale et une composante horizontale comprenant une composante tangentielle générant un couple de rotation individuel de compensation du dispositif de mesure autour de l'axe de référence, le couple de rotation individuel de compensation étant orienté en sens inverse du couple de rotation.

Avantageusement, le dispositif selon l'invention comprend au moins une des caractéristiques ci-dessous prises seules ou en combinaison :
- l'autre couple de rotation présente une intensité sensiblement égale à l'intensité du couple de rotation,
- les moyens de compensation comprennent un ensemble d'au moins un bloc de compensation destiné à être en contact physique direct avec l'eau et subissant, sous l'effet de l'écoulement de l'eau sur sa surface lors de la translation verticale, une force présentant une composante tangentielle à l'axe de référence de sorte à générer un autre couple de rotation individuel du dispositif de mesure autour de l'axe de référence en sens inverse du couple de rotation,
- le bloc de compensation est agencé et configuré de sorte que la force subie par le bloc de compensation présente une composante horizontale comprenant uniquement une composante tangentielle,
- l'ensemble d'au moins un bloc de compensation s'étend entre deux bras adjacents,
- au moins un bloc de compensation est porté par un bras,
- chaque bloc de compensation est configuré et agencé de sorte à générer, lors de la translation verticale, un couple de rotation individuel du dispositif de mesure autour de l'axe de référence en sens inverse du couple de rotation,
- l'ensemble d'au moins un bloc de compensation et l'ensemble de blocs de mesure est fixé sur l'ensemble de bras,
- un bloc de compensation est associé à chaque bloc de mesure, le bloc de compensation associé à un bloc de mesure étant fixé à un même bras que le bloc de mesure et étant configuré et agencé de sorte à générer, lors de la translation verticale, un couple de rotation individuel du dispositif de mesure sensiblement en sens inverse d'un couple de rotation individuel généré par le bloc de mesure lors de cette même translation verticale,
- le couple de rotation individuel généré par le bloc de compensation présente une même intensité que le couple de rotation individuel généré par le bloc de mesure,
- les bras sont télescopiques et comprennent chacun plusieurs segments aptes à coulisser les uns par rapport aux autres, le bloc de compensation étant fixé sur un même segment que le bloc de mesure associé,
- le bloc de mesure est monobloc avec le bloc de compensation associé,
- le bloc de compensation occupe, autour de l'axe de référence r, un secteur angulaire d'ouverture moins importante qu'un secteur angulaire occupé par le dispositif de mesure auquel il est associé,
- l'ensemble de blocs de mesure comprend un sous-ensemble de blocs de mesure montés sur un même bras, les blocs de mesure du sous-ensemble étant disposés d'un même côté du plan radial à l'axe de référence passant par l'axe du bras,
- chaque bloc de compensation monté sur le bras est disposé de l'autre côté du plan radial.
- la deuxième surface de contact avec l'eau présentant une normale moyenne inclinée, dans la configuration déployée, par rapport à l'axe de référence et par rapport à un axe tangentiel, défini par rapport à l'axe de référence, de sorte à générer le couple de rotation individuel de compensation du dispositif de mesure autour de l'axe de référence,
- la deuxième surface de contact avec l'eau est orientée dans le sens de la translation verticale,
- le bloc de compensation présente une forme de plaque parallélépipédique,
- une droite passant par un bord d'attaque et un bord de fuite du bloc de compensation présente une normale inclinée, dans la configuration déployée, par rapport par rapport à l'axe de référence et par rapport à un deuxième axe tangentiel, défini par rapport à l'axe de référence, de sorte à générer le couple de rotation individuel du dispositif de mesure autour de l'axe de référence,
- la première surface de contact avec l'eau présente une normale moyenne inclinée par rapport à l'axe de référence et par rapport à un axe tangentiel, défini par rapport à l'axe de référence, de sorte à générer le couple de rotation individuel du dispositif de mesure autour de l'axe de référence
- au moins un bloc de compensation intègre un élément de mesure autre qu'un capteur acoustique,
- au moins un bloc de compensation est dépourvu d'élément de mesure autre qu'un capteur acoustique,
- le dispositif de mesure est apte à être dans une configuration rangée dans laquelle les bras sont inscrits dans un cylindre dont l'axe est l'axe de référence, les blocs de mesure et les moyens de compensation étant configurés et agencés de sorte à être logés dans ledit cylindre lorsque le dispositif de mesure est dans la configuration rangée,
- les bras s'étendent dans un plan sensiblement perpendiculaire à l'axe de référence dans la configuration déployée.

L'invention se rapporte également à une bouée comprenant un dispositif de mesure selon l'invention.

Avantageusement, la bouée acoustique comprend un corps flottant et une ligne de plongée à laquelle sont reliés le corps flottant et le bras, la bouée étant configurée de sorte que le corps flottant flotte à la surface de l'eau et la ligne de plongée s'étende longitudinalement selon un axe vertical sensiblement confondu avec l'axe de référence lorsque le dispositif de mesure est dans la configuration déployée.

L'invention sera mieux comprise à l'étude de quelques modes de réalisation décrits à titre d'exemples nullement limitatifs, et illustrés par des dessins annexés sur lesquels :
- La figure 1 déjà décrite représente schématiquement en perspective une antenne de réception déployée de l'art antérieur,
- La figure 2 déjà décrite représente schématiquement une coupe transversale d'une bouée de l'art antérieur rangée dans un boitier cylindrique avant immersion,
- La figure 3a représente schématiquement le largage d'une bouée aérolargable depuis un aéronef, la figure 3b représente l'immersion de la bouée aérolargable et la figure 3c représente schématiquement le début du déploiement de la bouée après son immersion,
- la figure 4 représente schématiquement des éléments internes d'une bouée déployable en configuration rangée,
- la figure 5 représente schématiquement la bouée de la figure 4 lorsque les bras sont allongés,
- la figure 6 représente schématiquement la bouée de la figure 4 dans une configuration déployée,
- la figure 7 représente plus précisément un exemple de bouée aérolargable déployée selon l'invention,
- la figure 8 représente plus précisément les bras déployés portant des blocs de capteurs,
- la figure 9 représente schématiquement une coupe d'un des bras selon un plan vertical tangentiel à l'axe de référence r et passant par un des blocs de capteurs,
- la figure 10 représente schématiquement les bras dans une configuration repliée,
- la figure 11 représente schématiquement une coupe transverse des bras initialement en configuration repliée et logés dans le boitier, le corps 9 n'étant pas représenté pour plus de clarté.

D'une figure à l'autre les mêmes éléments sont désignés par les mêmes références numériques.

L'invention s'applique aux dispositifs de mesure destinés à être immergés et comprenant des blocs de mesure comprenant des capteurs acoustiques et étant portés par des bras répartis angulairement autour d'un axe de référence du dispositif de mesure. Le dispositif de mesure est apte à être dans une configuration déployée dans laquelle un axe de référence du dispositif de mesure est sensiblement vertical et dans laquelle les blocs de mesure génèrent un couple de rotation du dispositif de mesure autour de l'axe de référence lors d'une translation verticale du dispositif de mesure dans la configuration déployée.

La configuration déployée est sensiblement stable dans le sens où l'orientation des bras par rapport à l'axe de référence est sensiblement stable.

L'axe de référence peut être l'axe longitudinal selon lequel s'étend une ligne de plongée physique, reliée aux bras, lorsque le dispositif de mesure est en configuration déployée et/ou à un corps de support sur lequel sont montés les bras.

Chaque bloc de mesure comprend au moins un capteur d'ondes acoustiques apte à (ou configuré pour) mesurer des ondes acoustiques, par exemple, un hydrophone ou un transducteur électroacoustique.

Chaque bloc de mesure peut comprendre au moins un autre moyen d'une chaîne de mesure d'une onde acoustique comme par exemple un amplificateur pour amplifier la mesure obtenue par le capteur acoustique et/ou un convertisseur analogique numérique pour convertir un signal mesuré et éventuellement amplifié et/ou au moins un émetteur d'ondes acoustiques. Un émetteur d'ondes acoustiques est un moyen d'une chaine de mesure destinée à mesurer une onde acoustique comprenant un capteur d'ondes acoustiques destiné à mesurer une onde acoustique réfléchie sur une cible à partir d'une impulsion acoustique émise par l'émetteur d'ondes acoustiques. Chaque bloc de mesure peut en outre comprendre au moins un capteur apte à mesurer une autre grandeur physique comme par exemple un capteur de salinité de l'eau pour mesurer la salinité de l'eau et/ou un capteur de température pour mesurer la température de l'eau.

Les différents blocs de mesure peuvent comprendre des éléments différents.

Le dispositif de mesure peut, par exemple, comprendre une antenne de réception d'ondes acoustiques d'un sonar et éventuellement une antenne d'émission.

L'invention s'applique notamment aux bouées acoustiques aérolargables comprenant un dispositif de mesure comprenant une antenne de réception acoustique.

La description qui suit sera faite en référence aux bouées acoustiques aérolargables dans la suite du texte mais elle s'applique à tout autre dispositif de mesure tel que décrit précédemment et à tout autre dispositif sous-marin apte à être immergé comprenant un tel dispositif de mesure d'ondes acoustiques.

L'invention s'applique, par exemple, à tout dispositif de mesure déployable dans lequel les bras sont reliés à un corps de support comprenant un axe de référence r fixe par rapport au corps de support. Les bras sont répartis autour de l'axe r et chacun des bras est apte à être dans une configuration repliée, lorsque le dispositif de mesure est dans une configuration de rangement, et dans une configuration déployée, lorsque le dispositif de mesure est dans une configuration déployée. Une des extrémités de chaque bras s'éloigne de l'axe r lors du passage de la configuration repliée à la configuration déployée. Avantageusement, les bras sont répartis angulairement, de préférence mais non nécessairement de façon régulière, autour de l'axe r.

En variante, le dispositif de mesure est en permanence dans la configuration déployée.

Les bras peuvent présenter une longueur fixe ou être extensibles, par exemple télescopiques. Les bras présentent alors une configuration rangée dans laquelle ils sont dans une configuration repliée et présentent une longueur minimale, le dispositif de mesure est alors dans la configuration rangée. Ils passent de la configuration rangée à la configuration déployée par allongement des bras et par passage de la configuration repliée à la configuration déployée.

Les bras peuvent présenter une longueur fixe ou être extensibles, par exemple télescopiques. Les bras présentent alors une configuration rangée dans laquelle ils sont dans une configuration repliée. Ils passent de la configuration rangée à la configuration déployée par allongement des bras et par passage de la configuration repliée à la configuration déployée.

Le dispositif sous-marin peut comprendre une ligne de plongée reliée au corps de support, la ligne de plongée s'étendant sensiblement selon l'axe de référence et sensiblement verticalement au début du déploiement des bras.

Le dispositif sous-marin comprend, lorsque le dispositif de mesure est déployable, des moyens de déploiement permettant de déplacer les bras vers leur configuration déployée. Ces moyens de déploiement peuvent comprendre des lignes de déploiement du type hauban. Chaque hauban est relié, d'une part, à un des bras et, d'autre part, à une ligne de plongée reliant le corps de support à un flotteur de sorte que sous l'effet de l'immersion du dispositif, le flotteur et le corps de support s'éloignent l'un de l'autre entraînant un déploiement de la ligne de plongée qui vient se tendre, s'étendre verticalement selon l'axe de référence et tendre les haubans qui viennent tirer sur les bras.

En variante, des flotteurs sont par exemple fixés aux extrémités distales des bras, de sorte que lorsque les bras sont libérés, les flotteurs assurent le déploiement des bras. En variante, des ressorts de torsion peuvent être installés au niveau des articulations des bras au corps de support. L'axe d'enroulement de chaque ressort de torsion s'étend selon l'axe de la liaison pivot reliant le bras au corps de support.

Le dispositif sous-marin peut être configuré de sorte que les bras passent automatiquement de la configuration rangée à la configuration déployée lors de l'immersion du dispositif sous-marin ou peut être configuré pour déployer les bras sur commande.

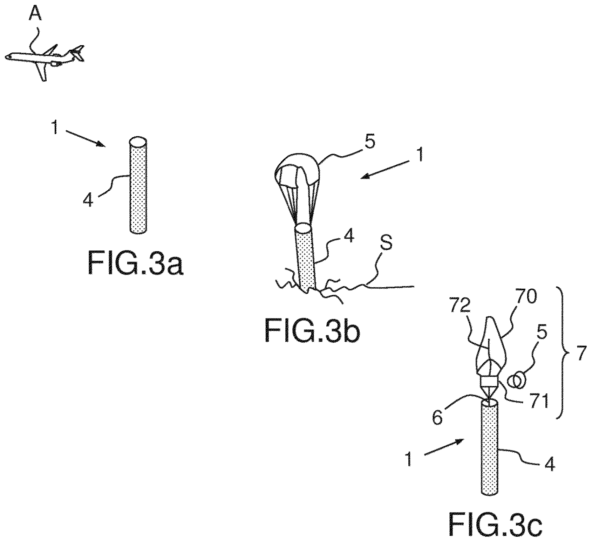

La figure 3a représente un aéronef A larguant une bouée acoustique 1 selon l'invention dans un environnement marin dans le but de détecter des ondes acoustiques correspondant à des ondes acoustiques émises ou réfléchies (échos) par des cibles potentielles 3. La bouée 1 pourrait en variante être larguée depuis un bâtiment de surface, par exemple depuis une plate-forme ou un véhicule sous-marin. Sur la figure 3a, la bouée 1 et le dispositif de mesure est dans une configuration initiale de rangement dans laquelle les éléments de la bouée sont logés dans un boîtier 4. Lorsque la bouée acoustique 1 est larguée, un parachute 5 de la bouée est automatiquement déployé pour ralentir sa chute comme visible sur la figure 3b. Une fois que la bouée est immergée, les éléments internes de la bouée sortent du boîtier 4 comme cela est représenté sur la figure 3c. La bouée comprend un corps flottant 7 initialement logé dans le boîtier 4 dans la configuration rangée de la bouée et configuré pour remonter à la surface de l'eau et rester flotter à la surface de l'eau lorsque la bouée 1 plonge dans l'eau.

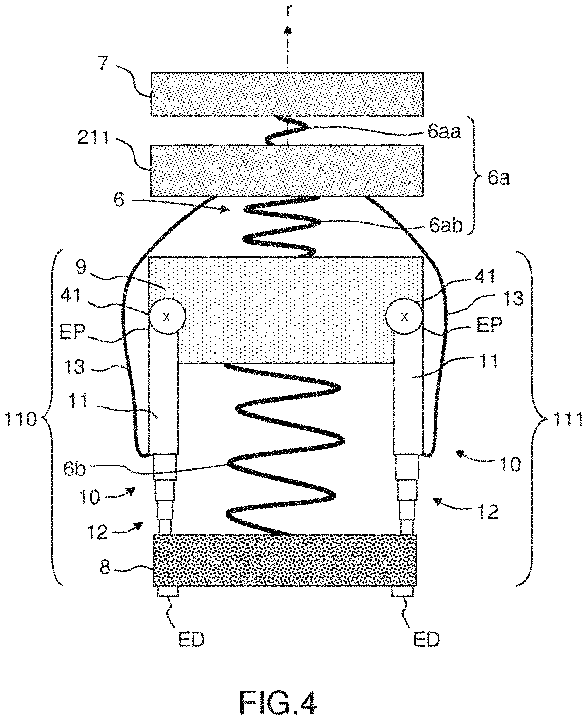

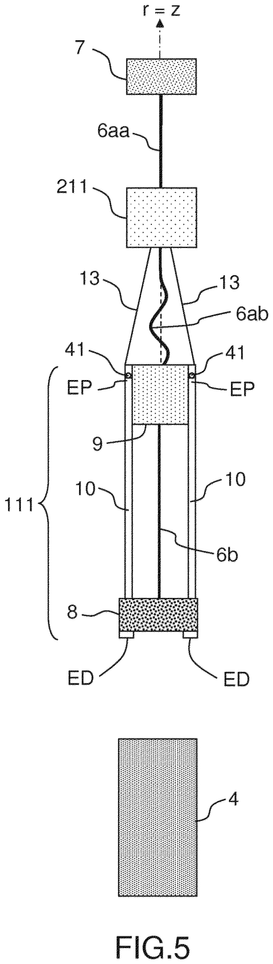

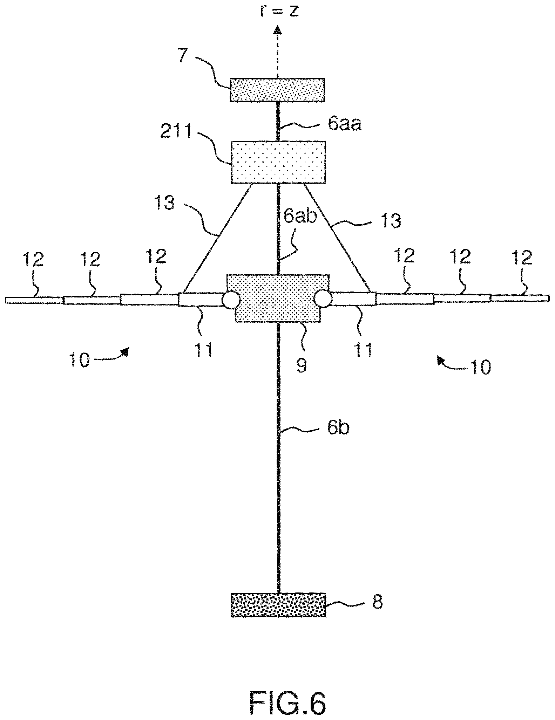

La figure 4 représente schématiquement les éléments internes de structure de la bouée tels qu'ils sont disposés à l'intérieur du boîtier 4 lorsque la bouée est dans la configuration de rangement. Tout comme sur les figures 5 et 6, les blocs de mesure ne sont pas représentés sur la figure 4.

La bouée comprend un corps flottant 7 initialement logé dans le boîtier 4 dans la configuration rangée de la bouée et configuré pour remonter à la surface de l'eau et flotter à la surface de l'eau lorsque la bouée 1 plonge dans l'eau.

La bouée 1 comprend un sonar 110 à flottabilité négative. Ce sonar 110 est relié au corps flottant 7 par une première portion 6a d'une ligne de plongée comprenant deux sous-portions 6aa, 6ab. La ligne de plongée 6 relie le corps flottant 7 à un sonar 110 à flottabilité négative via un corps d'attache 211. Plus précisément, la première portion 6a relie le corps flottant 7 au sonar 110 via un corps d'attache 211.

Le sonar 110 comprend une antenne de réception 111 comprenant le corps de support 9, un ensemble de bras 10 portant des capteurs acoustiques non représentés sur la figure 4 sur laquelle on a représenté schématiquement l'ensemble de bras par deux bras diamétralement opposés pour plus de clarté.

Les portions 6a et 6b sont initialement repliées.

Dans l'exemple de la figure 4, l'antenne de réception 111 comprend un autre corps 8 relié au corps 9 par une deuxième portion 6b de la ligne de plongée 6, le corps 8 étant relié au corps flottant 7 par l'intermédiaire du corps 9. En variante, le corps 8 est fixe par rapport au corps 9. Ils peuvent être monoblocs.

L'antenne de réception 111 est déployable. Autrement dit, elle est apte à passer d'une configuration rangée de la figure 4 à une configuration déployée de la figure 4 de sorte que chacun des bras passent aussi d'une configuration rangée, dans laquelle les bras sont dans une configuration repliée, à une configuration déployée.

Les bras 10 sont répartis angulairement autour d'un axe de référence r du corps de support 9, c'est-à-dire autour d'un axe r fixe par rapport au corps 10. Les bras 10 sont articulés au corps de support 9 de sorte à pouvoir passer de la configuration d'une configuration repliée à la configuration déployée par éloignement des bras de l'axe r. Plus précisément, chaque bras 10 s'étend longitudinalement depuis une extrémité proximale EP articulée au corps 9 jusqu'à une extrémité distale ED qui s'éloigne de l'axe r lors du déploiement du bras 10.

Sur la réalisation des figures, les bras 10 passent de la configuration repliée à la configuration déployée par pivotement par rapport au corps de support 9. Les bras 10 sont reliés au corps de support 9 par une liaison pivot 41. L'axe de chaque liaison pivot 41 est tangentiel à l'axe de référence r. Autrement dit, il est tangent à un cercle centré sur l'axe de référence r et perpendiculaire à l'axe r.

Les bras 10 sont maintenus dans la configuration rangée lorsque la bouée 1 est dans la configuration rangée représentée sur la figure 4.

Dans le mode de réalisation particulier des figures, les bras 10 sont télescopiques. Chaque bras 10 comprend un premier segment 11 relié au corps 9 et un ensemble d'au moins un autre segment 12 relié de façon télescopique au premier segment 11 de façon que le bras 10 puisse s'allonger. Les bras 10 sont aptes à passer de la configuration rangée de la figure 4, dans laquelle les bras sont dans la configuration repliée, à la configuration déployée de la figure 6 par allongement des bras 10 et rotation des bras 10 par rapport au corps 9. Les bras 10 passent par une configuration dite allongée représentée sur la figure 5 dans laquelle ils sont plus longs que sur la figure 4 et dans laquelle ils sont toujours dans la configuration repliée.

Comme visible sur les figures 4 à 7, la bouée 1 comprend un hauban 13 par bras 10. Chaque hauban 13 est relié d'une part à un corps d'attache 211 entre le corps de support 9 et le corps flottant 7 et d'autre part à un des bras 10, à distance de l'articulation entre le corps 9 et le bras 10.

Les haubans 13 sont configurés et agencés de façon à permettre de faire pivoter les bras 10 par rapport au corps 9 vers la configuration déployée.

Comme visible sur la figure 3c, le corps flottant 7 comprend un sac gonflable 70 qui sort du boîtier 4 et est gonflé par un gaz initialement comprimé logé dans la bouée, lorsque la bouée 1 plonge dans l'eau, de sorte que le corps flottant 7 présente une flottabilité positive le faisant remonter jusqu'à la surface de l'eau S et rester flotter au niveau de cette surface S lors du déploiement de la bouée. Le corps flottant 7 comprend un émetteur et/ou un récepteur 72 d'ondes radioélectriques permettant une communication à distance et sans fil entre la bouée 1 et un récepteur et/ou un émetteur distant ainsi qu'un boîtier 71 pouvant par exemple loger des équipements électroniques.

Alors que le corps flottant 7 remonte vers la surface, le sonar 110 coule, tout comme le boîtier 4. L'extrémité distale ED de chaque bras 10 est initialement couplée mécaniquement au corps 8 de sorte que les bras 10 s'allongent lorsque le corps 9 s'éloigne du corps flottant 7 jusqu'à la configuration allongée de la figure 5.

La plongée du corps 9 est arrêtée par la portion 6a de la ligne de plongée qui se tend lorsque le corps flottant 7 vient flotter à la surface de l'eau. La plongée du corps 8 est arrêtée lorsque les bras sont dans leur configuration allongée. Le boîtier 4 continue de plonger et vient donc libérer les bras 10 de leur configuration repliée.

La plongée du corps 8 alors que le corps 7 remonte à la surface de l'eau a entraîné une augmentation de la distance verticale séparant le corps d'attache 211 des bras 10, les haubans 13 se sont tendus et viennent alors tirer sur les bras 10 vers le haut en éloignant les extrémités distales ED des bras 10 du corps 9 et plus particulièrement de l'axe de référence r jusqu'à la configuration déployée de la figure 6.

Les bras 10 viennent alors s'étendre radialement par rapport à l'axe de référence r du corps 9. Autrement dit, les projections des bras respectifs dans un plan perpendiculaire à l'axe r s'étendent selon des axes radiaux respectifs définis par rapport à cet axe.

En variante, les bras 10 ne s'étendent pas radialement par rapport à l'axe de référence r du corps 9 dans la configuration déployée. Ils peuvent alors, par exemple, être reliés au corps 9 par une liaison pivot d'axe non tangentiel à l'axe r.

De façon générale, les bras sont avantageusement inclinés par rapport à l'axe r dans la configuration déployée.

Dans le cas non limitatif des figures, la bouée est configurée de sorte que l'axe r soit sensiblement vertical (parallèle à l'axe z) lors du passage des bras de la configuration repliée à la configuration déployée. L'axe r est l'axe longitudinal de la ligne de plongée 6 qui est tendue selon un axe sensiblement vertical sous l'effet de différences de flottabilité entre les corps de la bouée.

Sur la réalisation des figures, les bras 10 se déploient vers le haut. En variante, les bras se déploient vers le bas.

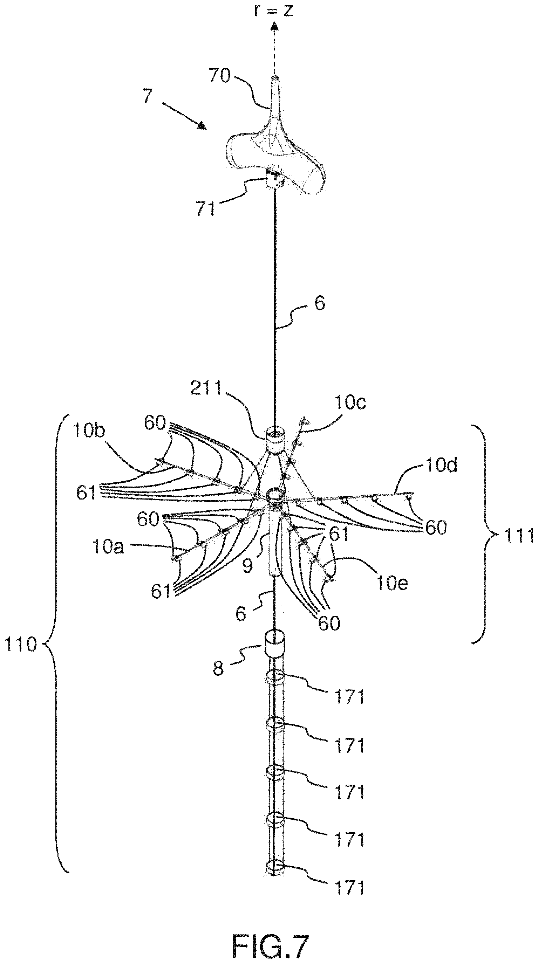

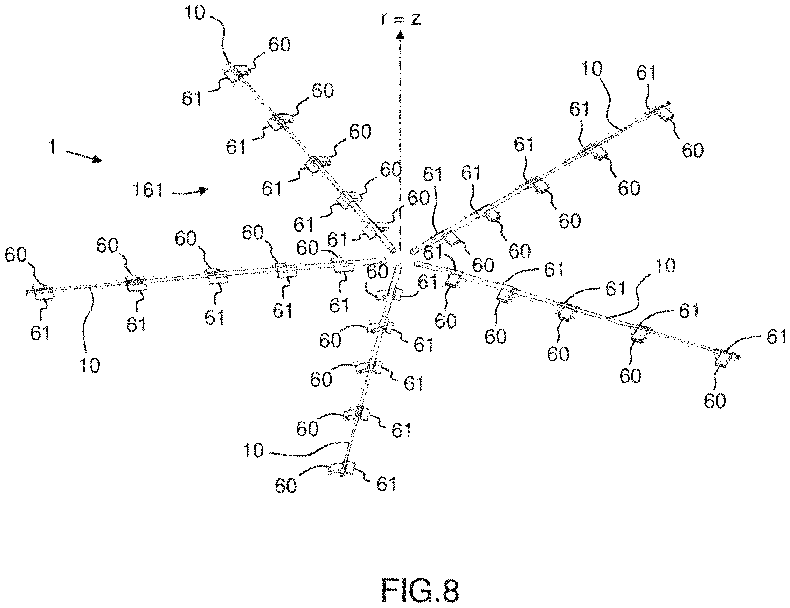

La bouée 1 est représentée dans sa configuration déployée sur la figure 7. L'antenne de réception est alors dans la configuration déployée. Les bras 10 et les blocs de mesure 60 sont représentés plus précisément, dans la configuration déployée, sur la figure 8.

Dans la réalisation particulière des figures 7 et 8, les bras 10 s'étendent dans un plan perpendiculaire à l'axe r du corps dans la configuration déployée. En variante, les bras sont inclinés par rapport au plan perpendiculaire à l'axe r dans la configuration déployée.

Sur la réalisation des figures les bras sont à symétrie de révolution autour de leurs axes longitudinaux respectifs. Ils présentent ici une section circulaire. En variante, les bras peuvent présenter une section transversale d'une autre forme fixe sensiblement sur toute sa longueur. Le diamètre de la section des bras peut varier le long des bras, notamment lorsqu'ils sont télescopiques, afin de permettre un emboitement des différents secteurs des bras montés les uns par rapport aux autres et un coulissement des différents secteurs les uns par rapport aux autres. De façon plus générale, les bras sont configurés de sorte à ne pas générer de couple de rotation du dispositif de mesure 111 autour de l'axe r lors d'une translation verticale du dispositif de mesure en configuration déployée.

Comme visible sur les figures 7 et 8, les blocs de mesure 60 portés par les bras 10 s'étendent entre les bras 10.

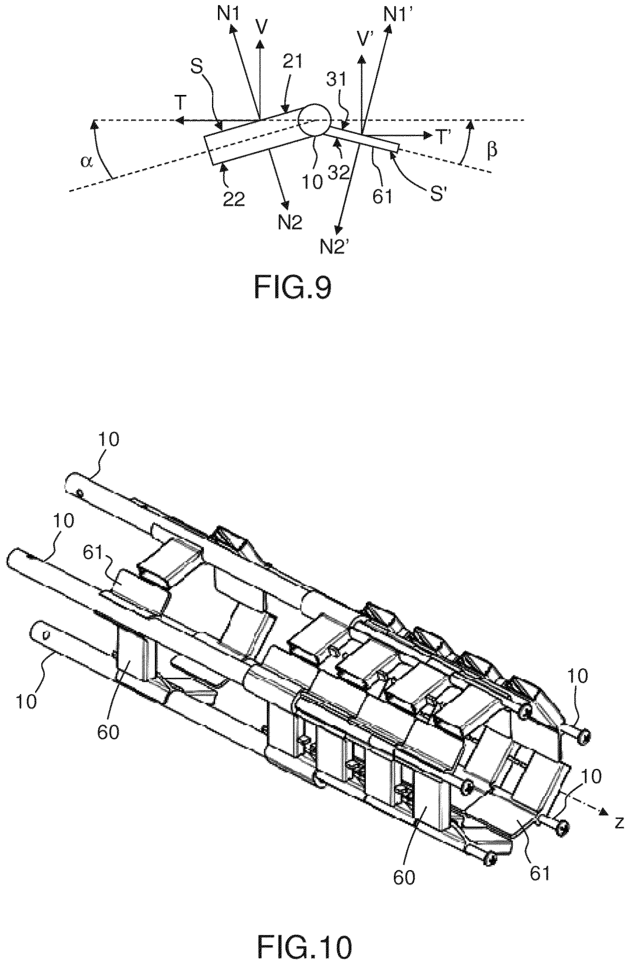

Sur la figure 9, on a représenté une coupe de la figure 8 selon un plan vertical sensiblement perpendiculaire à un bras 10, passant par un bloc de mesure 60 et tangentiel relativement à l'axe r au niveau du bloc de mesure 60.

Comme visible sur la figure 9, chaque bloc de mesure 60, délimité par une surface de contact S avec l'eau, génère un couple de rotation individuel du dispositif de réception 111 à autour de l'axe z lors d'un mouvement de translation du dispositif de mesure, en configuration déployée, selon l'axe vertical z dans les deux sens (vers le haut et vers le bas). Ces couples de rotation individuels sont dirigés dans le même sens autour de l'axe z de sorte que l'ensemble de blocs de mesure 60 génère un couple de rotation, autour de l'axe z, dans ce même sens. Par surface de contact avec l'eau, on entend une surface destinée à être en contact physique direct avec l'eau lorsque le dispositif de mesure est immergé.

En effet, comme représenté schématiquement sur la figure 9, sous l'effet de l'écoulement de l'eau sur la surface de contact S du bloc de mesure 60 lors d'une translation verticale vers le haut, chaque bloc de mesure subit une force comprenant une composante verticale V et une composante horizontale comprenant une composante tangentielle T. Cette composante tangentielle T génère un couple de rotation, dit individuel, du dispositif de mesure 111 autour de l'axe z.

Dans l'exemple non limitatif des figures, les blocs de mesure 60 présentent chacun une forme sensiblement parallélépipédique s'étendant entre les bras et étant inclinés, dans la configuration déployée, par rapport à l'axe r qui est sensiblement l'axe vertical z dans la configuration déployée. Cette forme des blocs de mesure n'est bien sûr par limitative. Les deux plus grandes faces du bloc de mesure 60 sont une première face 21 et une deuxième face 22, étant des surfaces de contact avec l'eau. En première approximation la force subie par le bloc de mesure lors d'une translation du dispositif de mesure 111 déployé vers le haut est la force subie par la première surface 21 et celle subie par la face 22 lors d'un mouvement vertical vers le bas. Ces faces 21 et 22 sont inclinées par rapport à l'axe de référence r sensiblement parallèle à l'axe z et par rapport à une droite horizontale sensiblement tangentielle, la direction tangentielle est définie par rapport à l'axe r. C'est aussi le cas de leurs normales respectives N1, N2.

Dans l'exemple non limitatif des figures, la composante horizontale H de la force subie par le bloc de mesure lors de chaque translation verticale (vers le haut ou vers le bas) est la composante tangentielle T.

Les composantes tangentielles T des forces subies par les différents blocs de mesure 60 sont, dans l'exemple non limitatif des figures, orientées dans un même sens car les blocs de mesure 60 présentent, dans la configuration déployée, une même inclinaison par rapport à l'axe z et par rapport à des axes tangentiels respectifs au niveau des blocs de mesure respectifs.

Selon l'invention, le dispositif de mesure 111 comprend des moyens de compensation 161 configurés et agencés de sorte à limiter ou empêcher la rotation du dispositif de mesure 111, en configuration déployée, autour de l'axe z lors de d'une translation verticale vers le haut et/ou vers le bas. Les moyens de compensation 161 s'opposent au mouvement de rotation du dispositif de mesure que tendent à provoquer les blocs de mesure lors de ce mouvement vertical. Autrement dit, les moyens de compensation 161 sont configurés et agencés pour générer, lors d'un mouvement vertical du dispositif de mesure 111 en configuration déployée, un couple de rotation du dispositif de mesure 111 autour de l'axe z, en sens inverse de celui généré par les blocs de mesure 60 lors du même mouvement vertical et d'intensité telle que le couple total subi par le dispositif de mesure autour de l'axe z lors du mouvement vertical du dispositif de mesure déployé présente une intensité inférieure à celle du couple de rotation du dispositif de mesure généré, autour de l'axe z, par les blocs de mesure 60. Cela permet de limiter la rotation du dispositif de mesure autour de l'axe z. A cet effet, le couple de rotation généré par les moyens de compensation autour de l'axe z présente une intensité inférieure à l'intensité du couple de rotation généré par les blocs de mesure, le dispositif de mesure tourne alors toujours autour de l'axe z mais avec une vitesse inférieure. En variante, le couple de rotation généré par les moyens de compensation autour de l'axe z présente une intensité sensiblement égale à l'intensité du couple de rotation généré par les blocs de mesure, le dispositif de mesure est alors sensiblement immobile en rotation autour de l'axe z. En variante, le couple de rotation généré par les moyens de compensation autour de l'axe z présente une intensité inférieure au double de l'intensité du couple de rotation généré par les blocs de mesure, le dispositif de mesure tourne alors en sens inverse, par rapport à un dispositif dépourvu de moyens de compensation, mais avec une vitesse plus faible.

L'invention permet de limiter ou de réduire la rotation du dispositif de mesure induite par le mouvement vertical et donc de limiter les problèmes précités liés à la rotation du dispositif de mesure autour de l'axe de rotation. Par ailleurs, cette solution ne nécessite pas de mobilité des blocs de mesure 60 en rotation autour de l'axe longitudinal des bras ce qui permet de conserver une certaine fiabilité du dispositif liée à la limitation du nombre de pièces mobiles les unes par rapport aux autres.

Avantageusement, les moyens de compensation sont configurés et agencés de sorte que le couple de rotation autour de l'axe z généré par les moyens de compensation 161 est sensiblement l'opposé du couple de rotation autour de l'axe z généré par l'ensemble de blocs de mesure 60 lors du mouvement vertical vers le haut et/ou vers le bas. Cela permet d'éviter la rotation du dispositif de mesure 111 autour de l'axe r sous l'effet du mouvement vertical dans le ou les sens concerné(s).

Comme visible sur la figure 9, les moyens de compensation 161 comprennent un ensemble d'au moins un bloc de compensation 61 délimité par une surface, dite surface de compensation S' destinée être en contact physique direct avec l'eau lorsque le dispositif de mesure est immergé. Les blocs de compensation 61 sont configurés et agencés de sorte à générer un couple de rotation, appelé couple de compensation, du dispositif de mesure autour de l'axe z en sens inverse du couple de rotation du dispositif de mesure autour de l'axe z généré par les blocs de mesure 60, lors d'un mouvement vertical du dispositif de mesure en configuration déployée, vers le haut et/ou vers le bas, de sorte à limiter le mouvement de rotation du dispositif de mesure 111 autour de l'axe z. Le couple généré par un bloc de compensation lors d'une translation vertical résulte de l'écoulement de l'eau sur la surface du bloc de compensation lors de ce mouvement.

Autrement dit, lorsque le dispositif de mesure 111 est en configuration déployée, chaque bloc de compensation subit, sous l'effet de l'écoulement de l'eau sur sa surface lors d'une translation du dispositif de mesure en configuration déployée selon l'axe z, une force comprenant une composante verticale V' (lors d'un mouvement vertical vers le haut) et une composante horizontale comprenant une composante tangentielle T' à l'axe z dirigée en sens inverse de la composante tangentielle T. Il en est de même lors d'une translation verticale du dispositif de mesure déployé selon l'axe z.

La composante verticale V' est dans le même sens que la composante verticale V.

Dans l'exemple non limitatif des figures, comme visible plus précisément sur la figure 9, chaque bloc de compensation 61 présente essentiellement la forme d'un parallélépipède rectangle et comprend deux plus grandes faces 31 et 32 formant sensiblement la surface S' de compensation. Ces faces 31 et 32 sont inclinées, dans la configuration déployée, par rapport à l'axe de référence r sensiblement parallèle à l'axe z et par rapport à un axe tangentiel défini par rapport à l'axe r. C'est aussi le cas de leurs normales respectives N1', N2'. L'axe tangentiel défini par rapport à l'axe r est un axe tangent à un cercle, centré sur l'axe de référence r et perpendiculaire à l'axe de référence r, au niveau du bloc de compensation ou de la face considérée. Autrement dit, la tangence de l'axe au cercle se fait au niveau du bloc de compensation ou de la face considérée. Le cercle est centré sur l'axe de référence et perpendiculaire à l'axe de référence.

En première approximation, la composante T' de la force subie par le bloc de compensation lors d'un mouvement vertical vers le haut du dispositif de compensation déployée est la composante tangentielle de la force subie par la surface 31 située en regard du flux de l'eau lors de ce mouvement. En première approximation, la composante T de la force subie par le bloc de compensation lors d'un mouvement vertical vers le bas du dispositif de compensation déployé est la composante tangentielle de la force subie par la surface 32 située en regard du flux de l'eau lors de ce mouvement.

De façon générale, chaque bloc de mesure comprend avantageusement une première surface de contact avec l'eau présentant une normale moyenne qui, dans la configuration déployée, est inclinée par rapport à l'axe de référence et par rapport à un premier axe tangentiel défini par rapport à l'axe de référence, de sorte à générer un couple de rotation individuel du dispositif de mesure autour de l'axe de référence r lors d'une translation du dispositif de mesure selon l'axe de référence dans un sens. La normale moyenne à une surface est la somme des normales élémentaires des surfaces élémentaires de la surface. Le premier axe tangentiel défini par rapport à l'axe r est un axe tangent à un cercle, centré sur l'axe de référence r et perpendiculaire à l'axe de référence r, au niveau du bloc de mesure considéré ou de la surface considérée. Il est ici représenté par l'axe T.

Lorsque la portance du bloc de mesure est négligeable, la première surface de contact avec l'eau est sensiblement la partie de la surface du bloc de mesure orientée dans le sens de la translation verticale du dispositif de mesure.

Dans l'exemple non limitatif de la figure 9, la surface orientée dans le sens de la translation verticale du dispositif de mesure est sensiblement la surface 21 lors d'un déplacement vers le haut et 22 lors d'un déplacement vers le bas.

Chaque bloc de compensation comprend avantageusement une deuxième surface de contact avec l'eau présentant une normale moyenne qui, en configuration déployée, est inclinée par rapport à l'axe de référence r et par rapport à un deuxième axe tangentiel défini par rapport à l'axe de référence r, de sorte à générer un couple de compensation individuel du dispositif de mesure autour de l'axe de référence r lors de la translation du dispositif de mesure selon l'axe de référence dans le même sens. Le deuxième axe tangentiel défini par rapport à l'axe r est un axe tangent à un cercle, centré sur l'axe de référence r et perpendiculaire à l'axe de référence r, au niveau du bloc de compensation ou de la surface considérée. Il est ici représenté par l'axe T'.

Lorsque la portance du bloc de compensation est négligeable, la surface de contact avec l'eau est sensiblement la surface orientée dans le sens de la translation verticale du dispositif de mesure

Dans l'exemple non limitatif de la figure 9, la surface orientée dans le sens de la translation verticale du bloc de compensation est sensiblement la surface 31 lors d'un déplacement vers le haut et la surface 32 lors d'un déplacement vers le bas.

Cela s'applique à différentes formes de blocs de mesure et de blocs compensation. Ces blocs peuvent présenter globalement une forme de plaque présentant des grandes surfaces rectangulaires ou de toute autre forme, comme par exemple elliptique.

La surface en contact direct avec l'eau peut être plane ou non. Elle peut, par exemple, présenter des nervures.

Le bloc de mesure ou de compensation peut présenter une ou plusieurs encoches.

Ces blocs peuvent présenter une épaisseur fixe ou variable. L'épaisseur peut être prise dans selon un axe tangentiel à un axe d'un bras. Cette épaisseur peut varier selon un axe radial défini par rapport à l'axe du bras.

Au moins un bloc de mesure et/ou un bloc de compensation peut être du type « aile d'avion ». Avantageusement, une droite passant par un bord d'attaque et un bord de fuite du bloc de compensation (ou du bloc de mesure) présente une normale qui, dans la configuration déployée, est inclinée par rapport à l'axe de référence r et par rapport à un axe tangentiel à l'axe de référence de sorte à générer le couple de rotation associé. L'axe tangentiel défini par rapport à l'axe r est un axe tangent à un cercle, centré sur l'axe de référence r et perpendiculaire à l'axe de référence r, au niveau du bloc considéré ou de la normale considérée.

Avantageusement mais non nécessairement, comme visible sur la figure 9, les blocs de compensation sont configurés et agencés de sorte que la composante horizontale H subie par chaque bloc de mesure 60 et celle H' subi par chaque bloc de compensation lors du mouvement vertical vers le haut et/ou vers le bas est sensiblement tangentielle, autrement dit, elle présente uniquement une composante tangentielle T ou T'. Cette configuration permet d'éviter une translation du dispositif selon l'axe radial (défini par rapport à l'axe z).

La normale moyenne à la première surface de contact avec l'eau de chaque bloc de mesure est avantageusement comprise, dans la configuration déployée, dans un plan comprenant un axe parallèle à l'axe de référence r et le premier axe tangentiel défini par rapport à l'axe de référence r. La normale moyenne à la deuxième surface de contact avec l'eau de chaque bloc de compensation est avantageusement comprise, dans la configuration déployée, dans un plan comprenant un axe parallèle à l'axe de référence r et le deuxième axe tangentiel défini par rapport à l'axe de référence r.

Les blocs de mesure 60 sont orientés de sorte que chaque bloc de compensation génère un couple de rotation individuel du dispositif de mesure 111 dans le même sens autour de l'axe z lors d'un mouvement de translation du dispositif de mesure dans un sens selon l'axe z. Par ailleurs, les blocs de compensation 61 sont orientés de sorte que chaque bloc de compensation 61 génère un couple de rotation individuel, appelé couple compensation individuel, du dispositif de mesure 111 autour de l'axe z, dans un même sens, inverse à celui des couples de rotations individuels générés par les blocs de mesure lors d'un mouvement de translation du dispositif de mesure 111 dans le même sens selon l'axe z.

Les blocs de mesure 60 et les blocs de compensation 61 sont portés par les bras 10 de sorte à être entraînés par les bras 10 lors du passage des bras de leur passage de la configuration repliée à la configuration rangée.

Les blocs de mesure 60 et les blocs de compensation 61 s'étendent entre les bras 10. Plus précisément, chacun d'eux et chacune des surfaces de compensation s'étend entre deux bras adjacents, c'est-à-dire sur un secteur angulaire formé autour de l'axe r et séparant deux bras adjacents.

Sur la réalisation particulière des figures comme visible sur la figure 8, chaque bloc de mesure 60 est fixé sur un bras 10 et chaque bloc de compensation 61 est fixé sur un bras 10. Cela permet d'assurer une meilleure fiabilité du dispositif de mesure que si ces blocs étaient montés mobiles sur les bras, par exemple pivotants autour de leurs axes longitudinaux respectifs.

Sur la réalisation des figures, plusieurs blocs de mesure 60 et plusieurs blocs de compensation 61 sont montés sur chacun des bras. En variante, au moins un bloc de compensation et/ou au moins un bloc de mesure est monté sur chacun des bras. Par exemple, les blocs de compensation peuvent être montés sur des bras différents des blocs de mesure. Sur la réalisation particulière des figures, chaque bras 10 porte le même nombre de blocs de mesure 60 que de blocs de compensation mais certains ne sont pas visibles sur la figure 8.

Les blocs de compensation et de mesure forment chacun une excroissance sur un des bras. Cela empêche, l'emboitement des blocs de compensation et des mesure les uns dans d'autres lorsqu'ils sont montés sur un bras télescopique dont des segments sont aptes à s'emboîter les uns dans les autres. Ainsi, les blocs de compensation et de mesure adjacents le long d'un même bras s'éloignent les uns des autres lors de l'allongement du bras. Ainsi, les différents blocs de mesure montés sur un même bras sont distants les uns des autres dans la configuration déployée et ces blocs de mesure et/ou ces blocs de compensation peuvent être en appui les uns sur les autres dans la configuration déployée. L'éloignement des blocs de mesure les uns des autres permet d'obtenir une antenne de plus grande taille et de faciliter le positionnement de cibles détectées par l'antenne.

Dans la réalisation des figures, chaque bloc de mesure 60 monté sur un bras forme une excroissance sur un des bras 10, l'excroissance s'éloigne du bras 10 dans un même premier sens de rotation autour de l'axe z lorsque le dispositif de mesure est déployé. Autrement dit, chacun des blocs de mesure 60 montés sur un même bras forme une excroissance sur le bras d'un même côté d'un plan radial à l'axe z contenant l'axe radial du bras. Chacun des blocs de compensation 61 montés sur un même bras 10 forme une excroissance sur le bras de l'autre côté du plan radial à l'axe z contenant l'axe radial du bras, par rapport aux blocs de mesure 60 montés sur le même bras 10. Par ailleurs, chacun des blocs de compensation 61 forme une excroissance s'éloignant du bras 10 sur lequel il est monté dans un même deuxième sens de rotation autour de l'axe z inverse au premier sens.

Sur la réalisation particulière des figures, chaque bloc de mesure 60 est associé à un bloc de compensation 61 fixé sur le même bras 10, de préférence, sur le même segment 11 ou 12 du bras 10 que le bloc de mesure 60 en regard du bloc de mesure 60 de l'autre côté d'un plan radial à l'axe z contenant l'axe radial du bras 10. Les différents blocs de mesure 60 sont associés à des blocs de compensation différents 61 respectifs. Chaque bloc de compensation 61 est agencé et configuré de sorte à exercer un couple de compensation individuel de module inférieur au double du couple individuel exercé par le bloc de mesure 60 qui lui est associé. Cela permet, dans le cas de bras télescopiques, d'éviter la génération de couples de torsion entre les différents segments des bras télescopiques autour de l'axe longitudinal de bras. Cela permet également de limiter la génération de couples à l'intérieur du bras ou du segment de bras considéré autour d'un axe de rotation tangentiel de nature à générer de flexion des bras. Ces deux types de couples créent des contraintes au niveau des bras pouvant engendrer des déformations des bras susceptibles de dégrader les performances de l'antenne de réception 111, les capteurs devant, de préférence être coplanaires ou au moins présenter des agencements prédéterminés les uns par rapport autres dans la configuration déployée. La configuration proposée permet également d'homogénéiser la composante axiale de la trainée au niveau du bras et de limiter les risques de déstabilisation du dispositif de mesure lors de la translation verticale du dispositif de mesure.

Avantageusement, le bloc de compensation 61 et le bloc de mesure 60 associés l'un à l'autre sont symétriques par rapport à un même plan tangentiel vertical lorsque le dispositif de mesure 111 est déployé.

Par ailleurs, dans la réalisation particulière des figures, le bloc de compensation associé à un bloc de mesure est monobloc avec ce bloc de mesure. Cela permet d'assurer un montage rapide de l'ensemble. En variante, ces deux blocs appartiennent à deux pièces différentes.

Avantageusement, le bloc comprenant le bloc de mesure et de compensation associés l'un à l'autre intègre des moyens de montage du bloc de mesure et de compensation sur le bras.

En variante, les blocs de mesure et de compensation associés l'un à l'autre sont décalés le long du bras ou le long d'un même segment du bras. Toutefois, cette solution est moins compacte et le réglage des surfaces des blocs de compensation est plus difficile. Par ailleurs, cette solution augmente les risques de déformation du bras et de déstabilisation du dispositif de mesure.

En variante, le nombre de blocs de compensation est différent du nombre de blocs de mesure. On peut même envisager un seul bloc de compensation.

Si le volume dont on dispose est suffisant, il est possible de prévoir un seul bloc de compensation configuré et agencé pour générer un couple de rotation en sens inverse du couple de rotation généré par l'ensemble de blocs de mesure en cas de translation du dispositif de mesure vers le haut et/ou vers le bas.

Sur la réalisation particulière des figures, les blocs de mesure et les blocs de compensation présentent chacun une forme de plaque présentant essentiellement la forme d'un parallélépipède rectangle comprenant deux plus grandes faces reliées par quatre faces latérales dont une face latérale est accolée au bras sur toute la longueur de la face latérale. Cette forme n'est absolument pas limitative, toute autre forme peut être envisageable. Les faces du bloc de compensation ne sont pas forcément planes ni parallèles deux à deux. Les blocs de mesure et de compensation sont avantageusement configurés pour ne pas se déformer lorsqu'elles sont immergées, par exemple sous l'effet du mouvement vertical du dispositif de mesure.

Avantageusement, les blocs de mesure 60 et les blocs de compensation 61 sont montés sur les bras de façon à être logés dans le boîtier 4 lorsque les bras sont dans la configuration rangée. Cette contrainte exclut donc une disposition des blocs de mesure et de compensation de façon à se trouver dans le plan horizontal des bras dans la configuration déployée.

Ainsi, avantageusement, les blocs de mesure 60 et les blocs de compensation 61 sont par exemple montés sur les bras de façon à être inscrits dans un cylindre d'axe r délimité par les bras 10, lorsque les bras sont dans la configuration repliée comme cela est représenté sur les figures 10 (sans le boîtier) et 11 (avec le boîtier).

Avantageusement, les blocs de mesure 60 et les blocs de compensation 61 sont montés sur les bras 10 de sorte à être logés, perpendiculairement à l'axe r, dans une couronne d'axe r délimitée le boitier 4 et le corps 9 dans la configuration rangée.

Dans la réalisation non limitative des figures, les bras 10 se déploient vers le haut et s'étendent dans un même plan sensiblement horizontal dans la configuration déployée. Les blocs de compensation 61 et de mesure 60 s'étendent alors en dessous du plan des bras 10, selon l'axe z, dans la configuration déployée.

En variante, les bras se déploient vers le bas et s'étendent dans un même plan sensiblement horizontal dans la configuration déployée. Les blocs de compensation et de mesure s'étendent alors au-dessus du plan des bras, selon l'axe r.

Avantageusement, les différents blocs de mesure 60 sont configurés et agencés de sorte à être soumis à une même composante tangentielle T lors d'une translation verticale du dispositif de mesure 111 déployé dans un sens et/ou dans le sens inverse. Cela est avantageusement aussi le cas pour les différents blocs de compensation et la composante tangentielle T'. Cela permet une certaine facilité de réalisation du dispositif de mesure 111.

A cet effet, dans la réalisation non limitative des figures dans laquelle les bras 10 sont disposés dans un plan sensiblement horizontal dans la configuration déployée, les blocs de mesure 60 présentent une même enveloppe extérieure, c'est-à-dire une même première surface de contact 21 et une même deuxième surface de contact 22. Par ailleurs, comme visible sur la figure 9, les blocs de mesure 60 sont disposés de sorte à former un même angle α orienté autour de l'axe du bras 10 sur lequel ils sont respectivement montés par rapport au plan horizontal H dans la configuration déployée. Cela permet d'assurer un positionnement coplanaire de l'ensemble des blocs de mesure 60 et un positionnement linéaire des blocs de mesure montés sur un même bras. Il en est de même pour les blocs de compensation 61 qui présentent une même enveloppe extérieure, c'est-à-dire une même première surface de compensation 31 et une même deuxième surface de compensation 32. Par ailleurs, les blocs de compensation 61 sont disposés de sorte à former un même angle radial β orienté autour de l'axe du bras 10 sur lequel ils sont respectivement montés par rapport au plan horizontal dans la configuration déployée. Par ailleurs, comme les blocs de compensation et de mesure correspondants sont disposés en regard l'un de l'autre, afin de générer des couples de rotation de même intensité autour de l'axe r, leurs premières surfaces de compensation et de contact présentent la même surface, leurs deuxièmes surfaces de compensation et de contact présentent la même surface et ils forment, autour de l'axe r, des angles α et β égaux.

Il faut noter que ces caractéristiques ne sont pas limitatives, les dimensions, formes et agencement des blocs de compensation sur les bras peuvent différer de celles décrites précédemment tout en générant un même couple de rotation individuel opposé au couple de rotation individuel généré par le bloc de mesure associé.

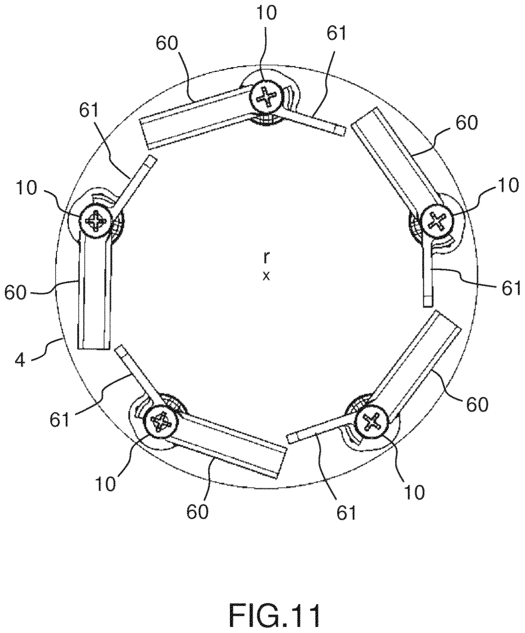

Sur la réalisation des figures, la dimension de chaque bloc de compensation 61 selon l'axe du bras 10 sur lequel il est monté est supérieure à la dimension du bloc de mesure qui lui est associé tandis que sa dimension tangentielle est supérieure à celle du bloc de mesure dans la configuration rangée de la figure 11. Autrement dit, le bloc de compensation est dimensionné de façon à occuper un secteur d'ouverture moins importante que le bloc de mesure associé autour de l'axe r, en particulier dans la configuration rangée. En effet, comme visible sur la figure 11, chaque bloc de mesure 60 laisse libre un espace insuffisant entre le bras 10 sur lequel il est monté et le bras 10 adjacent pour que le bloc de compensation puisse présenter une dimension tangentielle aussi importante que le bloc de mesure.

En variante, le dispositif de mesure comprend au moins un bloc de mesure et/ou un bloc de compensation est fixé à un câble porté par des bras adjacents et configuré et agencé de sorte à être en tension dans la configuration déployée.

Au moins un bloc de compensation peut comprendre un au moins un moyen de la chaine de mesure autre qu'un capteur acoustique. Au moins un bloc de compensation peut comprendre un amplificateur et/ou un convertisseur analogique numérique et/ou un émetteur d'ondes acoustiques, c'est-à-dire un moyen configuré pour émettre des ondes acoustiques. Au moins un bloc de compensation peut comprendre au moins capteur apte à mesurer une autre grandeur physique comme par exemple un capteur de salinité de l'eau pour mesurer la salinité de l'eau et/ou un capteur de température pour mesurer la température de l'eau. En variante, le bloc de compensation est dépourvu de moyens d'une chaine de mesure.

Sur la réalisation des figures, le dispositif de mesure 111 comprend également des émetteurs acoustiques 171 attachés à la ligne de plongée 6 comme visible sur la figure 7. L'antenne de réception 111 est interposée entre les émetteurs 171 et le corps flottant 7 sur la ligne 6. Ces émetteurs acoustiques 171 sont initialement logés dans le boîtier 4.

La cause principale de la mise en rotation de notre système lors des mouvements verticaux est le fait que les blocs de mesure soient inclinés. Cette inclinaison est par exemple due à la nécessité d'intégrer les blocs de mesure dans un volume limité dans une configuration rangée du dispositif de mesure. La solution est donc de mettre en oeuvre des surfaces similaires permettant de créer un contre couple pour limiter ou réduire le couple de rotation du dispositif de mesure autour de l'axe r.

La solution proposée permet d'assurer une bonne stabilité du dispositif de mesure même en présence de houle ou de changements de profondeur. En effet, cette solution permet de limiter, voir d'annuler les mouvements de rotation du dispositif de mesure par les blocs de mesure lors d'un mouvement vertical du dispositif de mesure pouvant par exemple être dus à la houle ou à un changement de profondeur commandé. Les surfaces de compensation sont, par nature, de taille faible de l'ordre de celle des blocs de compensation. Par conséquent, elles présentent une faible surface horizontale qui entraîne une faible augmentation de la traînée et donc ne perturbe pas les changements de profondeur, notamment la vitesse lors des changements de profondeur.

La solution proposée est facile à mettre en oeuvre. Elle présente par ailleurs un coût limité et occupe un volume très faible ce qui est capital dans le domaine des bouées aérolargables qui sont à usage unique.

## Revendications

1. Dispositif de mesure destiné à être immergé dans l'eau comprenant un ensemble de bras (10) et un axe de référence (r), le dispositif de mesure étant apte à être dans une configuration déployée dans laquelle les bras (10) s'étendent radialement autour de l'axe de référence (r), le dispositif de mesure comprenant un ensemble de blocs de mesure (60) portés par des bras de l'ensemble de bras et comprenant chacun un capteur d'ondes acoustiques, le dispositif de mesure étant **caractérisé en ce que** l'ensemble de blocs de mesure (60) est configuré et agencé de sorte à générer un couple de rotation du dispositif de mesure autour de l'axe de référence (r) s'étendant verticalement lors d'une translation verticale du dispositif de mesure dans la configuration déployée, chaque bloc de mesure de l'ensemble de mesure comprenant une première surface (21) de contact avec l'eau destinée à être en contact physique direct avec l'eau et orientée, dans la configuration déployée, de sorte qu'elle subisse, sous l'effet de l'écoulement de l'eau sur la première surface (21) de contact avec l'eau lors de la translation verticale, une première force comprenant une composante verticale et une composante horizontale comprenant une composante tangentielle, la direction tangentielle étant définie par rapport à l'axe de référence (r), la composante tangentielle générant un couple de rotation individuel du dispositif de mesure autour de l'axe de référence (r), les couples de rotations individuels générés par les blocs de mesure (60) de l'ensemble de mesure étant orientés dans le sens du couple de rotation, le dispositif de mesure comprenant des moyens de compensation (161) configurés et agencés de sorte à générer un autre couple de rotation du dispositif de mesure autour de l'axe de référence (r) lors de la translation verticale, l'autre couple de rotation étant dirigé en sens inverse du couple de rotation et présentant une intensité inférieure au double de celle du couple de rotation, les moyens de compensation (161) comprenant un ensemble d'au moins un bloc de compensation (61) comprenant une deuxième surface (22) de contact avec l'eau destinée à être en contact physique direct avec l'eau et orientée, dans la configuration déployée, de sorte qu'elle subisse, sous l'effet de l'écoulement de l'eau sur la deuxième surface (22) de contact avec l'eau lors de la translation verticale, une deuxième force comprenant une composante verticale et une composante horizontale comprenant une composante tangentielle générant un couple de rotation individuel de compensation du dispositif de mesure autour de l'axe de référence (r), le couple de rotation individuel de compensation étant orienté en sens inverse du couple de rotation.

2. Dispositif de mesure selon la revendication précédente, dans lequel l'autre couple de rotation présente une intensité sensiblement égale à l'intensité du couple de rotation.

3. Dispositif de mesure selon l'une quelconque des revendications précédentes, dans lequel le bloc de compensation (61) est agencé et configuré de sorte que la force subie par le bloc de compensation (61) présente une composante horizontale comprenant uniquement une composante tangentielle.

4. Dispositif de mesure selon l'une quelconque des revendications précédentes, dans lequel l'ensemble d'au moins un bloc de compensation (61) et l'ensemble de blocs de mesure (60) est fixé sur l'ensemble de bras (10).

5. Dispositif de mesure selon l'une quelconque des revendications précédentes, dans lequel un bloc de compensation (61) est associé à chaque bloc de mesure, le bloc de compensation (61) associé à un bloc de mesure étant fixé à un même bras (10) que le bloc de mesure et étant configuré et agencé de sorte à générer, lors de la translation verticale, un couple de rotation individuel du dispositif de mesure sensiblement en sens inverse d'un couple de rotation individuel généré par le bloc de mesure lors de la translation verticale.

6. Dispositif de mesure selon la revendication précédente, dans lequel le couple de rotation individuel généré par le bloc de compensation (61) présente une même intensité que le couple de rotation individuel généré par le bloc de mesure.

7. Dispositif de mesure selon l'une quelconque des revendications 5 à 6, dans lequel les bras (10) sont télescopiques et comprennent chacun plusieurs segments aptes à coulisser les uns par rapport aux autres, le bloc de compensation (61) étant fixé sur un même segment que le bloc de mesure associé.

8. Dispositif de mesure selon l'une quelconque des revendications 5 à 7, dans lequel le bloc de mesure est monobloc avec le bloc de compensation (61) associé.

9. Dispositif de mesure selon l'une quelconque des revendications précédentes, dans lequel le bloc de compensation (61) occupe, autour de l'axe de référence r, un secteur angulaire d'ouverture moins importante qu'un secteur angulaire occupé par le dispositif de mesure auquel il est associé.

10. Dispositif de mesure selon l'une quelconque des revendications précédentes, dans lequel l'ensemble de blocs de mesure (60) comprend un sous-ensemble de blocs de mesure montés sur un même bras (10), les blocs de mesure du sous-ensemble étant disposés d'un même côté du plan radial à l'axe de référence (r) contenant l'axe du bras (10).

11. Dispositif de mesure selon la revendication précédente, dans lequel chaque bloc de compensation (61) monté sur le bras (10) est disposé de l'autre côté du plan radial.

12. Dispositif de mesure selon l'une quelconque des revendications précédentes, dans lequel la deuxième surface (22) de contact avec l'eau présentant une normale moyenne inclinée, dans la configuration déployée, par rapport à l'axe de référence (r) et par rapport à un axe tangentiel à l'axe de référence (r), de sorte à générer le couple de rotation individuel de compensation du dispositif de mesure autour de l'axe de référence (r).

13. Dispositif de mesure selon la revendication précédente, dans lequel la deuxième surface (22) de contact avec l'eau est orientée dans le sens de la translation verticale.

14. Dispositif de mesure selon l'une quelconque des revendications précédentes, dans lequel le bloc de compensation (61) présente une forme de plaque parallélépipédique.

15. Dispositif de mesure selon l'une quelconque des revendications 1 à 11, dans lequel une droite passant par un bord d'attaque et un bord de fuite du bloc de compensation (61) présente une normale inclinée, dans la configuration déployée, par rapport à l'axe de référence (r) et par rapport à un axe tangentiel, défini par rapport à l'axe de référence (r), de sorte à générer le couple de rotation individuel du dispositif de mesure autour de l'axe de référence (r).

16. Dispositif de mesure selon l'une quelconque des revendications précédentes, dans lequel la première surface (21) de contact avec l'eau présente une normale moyenne inclinée, dans la configuration déployée, par rapport à l'axe de référence (r) et par rapport à un axe tangentiel, défini par rapport à l'axe de référence (r), de sorte à générer le couple de rotation individuel du dispositif de mesure autour de l'axe de référence (r).

17. Dispositif de mesure selon l'une quelconque des revendications précédentes, dans lequel au moins un bloc de compensation (61) intègre un élément de mesure autre qu'un capteur acoustique.

18. Dispositif de mesure selon l'une quelconque des revendications précédentes, dans lequel le bloc de compensation (61) est dépourvu de capteur acoustique.

19. Dispositif de mesure selon l'une quelconque des revendications précédentes, dans lequel le dispositif de mesure est apte à être dans une configuration rangée dans laquelle les bras (10) sont inscrits dans un cylindre dont l'axe est l'axe de référence, les blocs de mesure et les moyens de compensation (161) étant configurés et agencés de sorte à être logés dans ledit cylindre lorsque le dispositif de mesure est dans la configuration rangée.

20. Dispositif de mesure selon l'une quelconque des revendications précédentes, dans lequel les bras (10) s'étendent dans un plan sensiblement perpendiculaire à l'axe de référence dans la configuration déployée

21. Bouée acoustique (1) comprenant un dispositif de mesure selon l'une quelconque des revendications précédentes.

22. Bouée acoustique selon la revendication précédente, comprenant un corps flottant (7) et une ligne de plongée (6) à laquelle sont reliés le corps flottant (7) et le bras (10), la bouée (1) étant configurée de sorte que le corps flottant (7) flotte à la surface de l'eau et la ligne de plongée (6) s'étende longitudinalement selon un axe vertical sensiblement confondu avec l'axe de référence (r) lorsque le dispositif de mesure est dans la configuration déployée.

## Patentansprüche

1. Messvorrichtung, die zum Eintauchen in Wasser bestimmt ist, die einen Satz von Armen (10) und eine Referenzachse (r) umfasst, wobei die Messvorrichtung geeignet ist, um in einer ausgefahrenen Konfiguration zu sein, in der sich die Arme (10) radial um die Referenzachse (r) erstrecken, wobei die Messvorrichtung einen Satz von Messblöcken (60) umfasst, die von den Armen des Satzes von Armen getragen werden und jeweils einen Akustikwellensensor umfassen, wobei die Messvorrichtung **dadurch gekennzeichnet ist, dass** der Satz von Messblöcken (60) zum Erzeugen eines Drehmoments der Messvorrichtung um die sich vertikal erstreckende Referenzachse (r) bei einer vertikalen Translation der Messvorrichtung in der ausgefahrenen Konfiguration konfiguriert und angeordnet ist, wobei jeder Messblock des Messsatzes eine erste Wasserkontaktfläche (21) umfasst, die dafür bestimmt ist, in direktem physischem Kontakt mit dem Wasser zu stehen, und die in der ausgefahrenen Konfiguration so orientiert ist, dass sie unter der Wirkung der Wasserströmung über die erste Wasserkontaktfläche (21) bei der vertikalen Translation eine erste Kraft erfährt, die eine vertikale Komponente und eine horizontale Komponente umfasst, die eine Tangentialkomponente umfasst, wobei die Tangentialrichtung in Bezug auf die Referenzachse (r) definiert ist, wobei die Tangentialkomponente ein individuelles Drehmoment der Messvorrichtung um die Referenzachse (r) erzeugt, wobei die von den Messblöcken (60) des Messsatzes erzeugten individuellen Drehmomente in der Richtung des Drehmoments orientiert sind, wobei die Messvorrichtung Kompensationsmittel (161) umfasst, die zum Erzeugen eines anderen Drehmoments der Messvorrichtung um die Referenzachse (r) bei der vertikalen Translation konfiguriert und angeordnet sind, wobei das andere Drehmoment in die entgegengesetzte Richtung des Drehmoments gerichtet ist und eine Intensität aufweist, die weniger als doppelt so groß ist wie die des Drehmoments, wobei die Kompensationsmittel (161) einen Satz aus mindestens einem Kompensationsblock (61) umfassen, der eine zweite Wasserkontaktfläche (22) umfasst, die dafür bestimmt ist, in direktem physischem Kontakt mit dem Wasser zu stehen, und in der ausgefahrenen Konfiguration so orientiert ist, dass sie unter der Wirkung der Wasserströmung auf der zweiten Wasserkontaktfläche (22) bei der vertikalen Translation, eine zweite Kraft erfährt, die eine vertikale Komponente und eine horizontale Komponente umfasst, die eine Tangentialkomponente umfasst, die ein individuelles Kompensationsdrehmoment der Messvorrichtung um die Referenzachse (r) erzeugt, wobei das individuelle Kompensationsdrehmoment in die entgegengesetzte Richtung zum Drehmoment orientiert ist.

2. Messvorrichtung nach dem vorhergehenden Anspruch, wobei das andere Drehmoment eine Intensität im Wesentlichen gleich der Intensität des Drehmoments aufweist.

3. Messvorrichtung nach einem der vorhergehenden Ansprüche, wobei der Kompensationsblock (61) so angeordnet und konfiguriert ist, dass die auf den Kompensationsblock (61) einwirkende Kraft eine horizontale Komponente aufweist, die nur eine Tangentialkomponente umfasst.

4. Messvorrichtung nach einem der vorhergehenden Ansprüche, wobei der Satz aus mindestens einem Kompensationsblock (61) und dem Satz von Messblöcken (60) an dem Satz von Armen (10) befestigt ist.

5. Messvorrichtung nach einem der vorhergehenden Ansprüche, wobei jedem Messblock ein Kompensationsblock (61) zugeordnet ist, wobei der einem Messblock zugeordnete Kompensationsblock (61) an demselben Arm (10) wie der Messblock befestigt und so konfiguriert und angeordnet ist, dass er bei der vertikalen Translation ein individuelles Drehmoment der Messvorrichtung im Wesentlichen in der entgegengesetzten Richtung zu einem von dem Messblock bei der vertikalen Translation erzeugten individuellen Drehmoment erzeugt.

6. Messvorrichtung nach dem vorhergehenden Anspruch, wobei das von dem Kompensationsblock (61) erzeugte individuelle Drehmoment dieselbe Stärke wie das von dem Messblock erzeugte individuelle Drehmoment aufweist.

7. Messvorrichtung nach einem der Ansprüche 5 bis 6, wobei die Arme (10) teleskopisch sind und jeweils mehrere Segmente umfassen, die geeignet sind, um relativ zueinander zu gleiten, wobei der Kompensationsblock (61) an dem gleichen Segment wie der zugeordnete Messblock befestigt ist.

8. Messvorrichtung nach einem der Ansprüche 5 bis 7, wobei der Messblock mit dem zugeordneten Kompensationsblock (61) einstückig ist.

9. Messvorrichtung nach einem der vorhergehenden Ansprüche, wobei der Kompensationsblock (61) um die Referenzachse r einen Winkelsektor mit einer kleineren Öffnung als ein Winkelsektor einnimmt, der von der Messvorrichtung eingenommen wird, der er zugeordnet ist.

10. Messvorrichtung nach einem der vorhergehenden Ansprüche, wobei der Satz von Messblöcken (60) eine Teilmenge von am selben Arm (10) montierten Messblöcken umfasst, wobei die Messblöcke der Teilmenge auf derselben Seite der Ebene radial zur Referenzachse (r), die die Achse des Arms (10) enthält, angeordnet sind.

11. Messvorrichtung nach dem vorhergehenden Anspruch, wobei jeder an dem Arm (10) montierte Kompensationsblock (61) auf der anderen Seite der Radialebene angeordnet ist.

12. Messvorrichtung nach einem der vorhergehenden Ansprüche, wobei die zweite Wasserkontaktfläche (22) eine mittlere Normale aufweist, die in der ausgefahrenen Konfiguration in Bezug auf die Referenzachse (r) und in Bezug auf eine zur Referenzachse (r) tangentiale Achse geneigt ist, sodass das individuelle Kompensationsdrehmoment der Messvorrichtung um die Referenzachse (r) erzeugt wird.

13. Messvorrichtung nach dem vorhergehenden Anspruch, wobei die zweite Wasserkontaktfläche (22) in der Richtung der vertikalen Translation orientiert ist.

14. Messvorrichtung nach einem der vorhergehenden Ansprüche, wobei der Kompensationsblock (61) eine parallelflache Plattenform aufweist.

15. Messvorrichtung nach einem der Ansprüche 1 bis 11, wobei eine Gerade durch eine Vorderkante und eine Hinterkante des Kompensationsblocks (61) eine Normale aufweist, die in der ausgefahrenen Konfiguration in Bezug auf die Referenzachse (r) und in Bezug auf eine Tangentialachse, die in Bezug auf die Referenzachse (r) definiert ist, geneigt ist, sodass das individuelle Drehmoment der Messvorrichtung um die Referenzachse (r) erzeugt wird.

16. Messvorrichtung nach einem der vorhergehenden Ansprüche, wobei die erste Wasserkontaktfläche (21) eine mittlere Normale aufweist, die in der ausgefahrenen Konfiguration in Bezug auf die Referenzachse (r) und in Bezug auf eine Tangentialachse, die in Bezug auf die Referenzachse (r) definiert ist, geneigt ist, um das individuelle Drehmoment der Messvorrichtung um die Referenzachse (r) zu erzeugen.

17. Messvorrichtung nach einem der vorhergehenden Ansprüche, wobei in mindestens einem Kompensationsblock (61) ein anderes Messelement als ein akustischer Sensor integriert ist.

18. Messvorrichtung nach einem der vorhergehenden Ansprüche, wobei der Kompensationsblock (61) keinen akustischen Sensor aufweist.

19. Messvorrichtung nach einem der vorhergehenden Ansprüche, wobei die Messvorrichtung geeignet ist, um in einer verstauten Konfiguration zu sein, in der die Arme (10) in einen Zylinder einbeschrieben sind, dessen Achse die Referenzachse ist, wobei die Messblöcke und die Kompensationsmittel (161) dafür konfiguriert und angeordnet sind, in dem Zylinder untergebracht zu werden, wenn die Messvorrichtung in der verstauten Konfiguration ist.

20. Messvorrichtung nach einem der vorhergehenden Ansprüche, wobei sich die Arme (10) in der ausgefahrenen Konfiguration in einer Ebene im Wesentlichen senkrecht zur Referenzachse erstrecken.

21. Akustische Boje (1), die eine Messvorrichtung nach einem der vorhergehenden Ansprüche umfasst.

22. Akustische Boje nach dem vorhergehenden Anspruch, die einen Schwimmkörper (7) und eine Tauchleine (6) umfasst, mit der der Schwimmkörper (7) und der Arm (10) verbunden sind, wobei die Boje (1) so konfiguriert ist, dass der Schwimmkörper (7) an der Wasseroberfläche schwimmt und sich die Tauchleine (6) längs entlang einer vertikalen Achse erstreckt, die im Wesentlichen mit der Referenzachse (r) zusammenfällt, wenn die Messvorrichtung in der ausgefahrenen Konfiguration ist.

## Claims

1. A measurement device intended to be immersed in water, comprising a set of arms (10) and a reference axis (r), the measurement device being able to be in a deployed configuration in which the arms (10) extend radially about the reference axis (r), the measurement device comprising a set of measurement blocks (60) borne by arms of the set of arms and each comprising an acoustic wave sensor, the measurement device being **characterised in that** the set of measurement blocks (60) is configured and arranged in such a way as to generate a torque of the measurement device about the reference axis (r) extending vertically during a vertical translational movement of the measurement device in the deployed configuration, each measurement block of the measurement set comprising a first water-contact surface (21) intended to be in direct physical contact with the water and oriented, in the deployed configuration, in such a way that it experiences, under the effect of the flow of water over the first water-contact surface (21) during the vertical translational movement, a first force comprising a vertical component and a horizontal component comprising a tangential component, the tangential direction being defined with respect to the reference axis (r), the tangential component generating an individual torque of the measurement device about the reference axis (r), the individual torques generated by the measurement blocks (60) of the measurement set being oriented in the direction of the torque, the measurement device comprising compensation means (161) configured and arranged in such a way as to generate another torque of the measurement device about the reference axis (r) during the vertical translational movement, the other torque being directed in the opposite direction to the torque and having an intensity less than twice that of the torque, the compensation means (161) comprising a set of at least one compensation block (61) comprising a second water-contact surface (22) intended to be in direct physical contact with the water and oriented, in the deployed configuration, in such a way that it experiences, under the effect of the flow of water over the second water-contact surface (22) during the vertical translational movement, a second force comprising a vertical component and a horizontal component comprising a tangential component generating an individual compensation torque of the measurement device about the reference axis (r), the individual compensation torque being oriented in the opposite direction to the torque.

2. The measuring device according to the preceding claim, wherein the other torque has an intensity substantially equal to the intensity of the torque.

3. The measuring device according to any one of the preceding claims, wherein the compensation block (61) is arranged and configured in such a way that the force experienced by the compensation block (61) has a horizontal component comprising only a tangential component.

4. The measurement device according to any one of the preceding claims, wherein the set of at least one compensation block (61) and the set of measurement blocks (60) is fixed to the set of arms (10).

5. The measurement device according to any one of the preceding claims, wherein one compensation block (61) is associated with each measurement block, the compensation block (61) associated with a measurement block being fixed to the same arm (10) as the measurement block and being configured and arranged in such a way as to generate, during the vertical translational movement, an individual torque of the measurement device substantially in the opposite direction to an individual torque generated by the measurement block during the vertical translational movement.

6. The measurement device according to the preceding claim, wherein the individual torque generated by the compensation block (61) has the same intensity as the individual torque generated by the measurement block.

7. The measuring device according to any one of claims 5 to 6, wherein the arms (10) are telescopic and each comprise multiple segments able to slide relative to one another, the compensation block (61) being fixed to the same segment as the associated measurement block.

8. The measurement device according to any one of claims 5 to 7, wherein the measurement block is integral with the associated compensation block (61).

9. The measurement device according to any one of the preceding claims, wherein the compensation block (61) occupies, about the reference axis r, an angular sector with a smaller opening as an angular sector occupied by the measurement device with which it is associated.

10. The measurement device according to any one of the preceding claims, wherein the set of measurement blocks (60) comprises a subset of measurement blocks which are mounted on the same arm (10), the measurement blocks of the subset being disposed on the same side of the plane radial to the reference axis (r) containing the axis of the arm (10).

11. The measurement device according to the preceding claim, wherein each compensation block (61) mounted on the arm (10) is disposed on the other side of the radial plane.

12. The measurement device according to any one of the preceding claims, wherein the second water-contact surface (22) has a mean normal that is inclined, in the deployed configuration, with respect to the reference axis (r) and with respect to an axis tangential to the reference axis (r), so as to generate the individual compensation torque of the measurement device about the reference axis (r).

13. The measurement device according to the preceding claim, wherein the second water-contact surface (22) is oriented in the direction of the vertical translational movement.

14. The measurement device according to any one of the preceding claims, wherein the compensation block (61) has a shape of a parallelepipedal plate.

15. The measurement device according to any one of claims 1 to 11, wherein a straight line passing through a leading edge and a trailing edge of the compensation block (61) has a normal that is inclined, in the deployed configuration, with respect to the reference axis (r) and with respect to a tangential axis, defined with respect to the reference axis (r), so as to generate the individual torque of the measurement device about the reference axis (r).

16. The measurement device according to any one of the preceding claims, wherein the first water-contact surface (21) has a mean normal that is inclined, in the deployed configuration, with respect to the reference axis (r) and with respect to a tangential axis, defined with respect to the reference axis (r), so as to generate the individual torque of the measurement device about the reference axis (r).

17. The measurement device according to any one of the preceding claims, wherein at least one compensation block (61) incorporates a measurement element other than an acoustic sensor.

18. The measurement device according to any one of the preceding claims, wherein the compensation block (61) has no acoustic sensor.

19. The measurement device according to any one of the preceding claims, wherein the measurement device is able to be in a stowed configuration in which the arms (10) are inscribed inside a cylinder, the axis of which is the reference axis, the measurement blocks and the compensation means (161) being configured and arranged in such a way as to be housed inside said cylinder when the measurement device is in the stowed configuration.

20. The measurement device according to any one of the preceding claims, wherein the arms (10) extend in a plane substantially perpendicular to the reference axis in the deployed configuration.

21. A sonobuoy (1) comprising a measurement device according to any one of the preceding claims.

22. The sonobuoy according to the preceding claim, comprising a floating body (7) and a dunking line (6) to which the floating body (7) and the arm (10) are connected, the buoy (1) being configured in such a way that the floating body (7) floats on the water surface and the dunking line (6) extends longitudinally along a vertical axis that substantially coincides with the reference axis (r) when the measurement device is in the deployed configuration.
